# EUROPEAN PATENT SPECIFICATION

(11) **EP 3 309 941 B1**
(45) Date of publication and mention of the grant of the patent: **19.04.2023**
(21) Application number: 17191687.7
(22) Date of filing: 18.09.2017
(51) Int. Cl.: H02K 21/24, B61D 43/00, B61K 9/04, B61K 9/12, B61F 15/00, H02K 7/18

(54) **COVERING DEVICE OF AN AXLE BOX COMPRISING AN ELECTRIC GENERATOR**
ABDECKUNG EINES ACHSLAGERS, DIE EINEN ELEKTRISCHEN GENERATOR ENTHÄLT
COUVERCLE D'UNE BOÎTE D'ESSIEU COMPRENANT UN GÉNÉRATEUR ÉLECTRIQUE

(30) Priority: 20.09.2016 IT 201600094177
(43) Date of publication of application: 18.04.2018
(73) Proprietor: Progress Rail Signaling S.p.A., 51034 Serravalle Pistoiese (Pistoia) (IT)
(72) Inventor: Pescioni, Marco, I-51034 Serravalle Pistoiese (PT) (IT)
(74) Representative: Carangelo, Pierluigi

(56) References cited:
- EP-A1- 0 518 456
- EP-A2- 2 006 999
- EP-A2- 2 284 980
- US-A- 4 377 975

## Description

### TECHNICAL FIELD OF THE INVENTION

The present invention relates to the technical field of diagnostic systems for railway trains, and in particular relates to a combination of a covering device of an axle box, an axle box and an axle comprising an electric generator.

### PRIOR ART

Condition monitoring of railway trains is unquestionably more effective and cost-effective than scheduled maintenance. The latter is notoriously based on the periodical replacement of elements, according to probabilistic life expectations, which are inaccurate and therefore require high safety margins; furthermore, this type of approach adequately protects from normal wear, but not from traumatic faults or manufacturing defects, which are the cause of the severest accidents.

On the contrary, condition monitoring implies the installation of even very complex monitoring apparatuses aboard the vehicles, in environmental conditions which are often prohibitive and in restricted spaces.

Condition monitoring performance and promptness span across a wide range of cases.

Minimal telemetry, based on sending small-size messages at a relatively low frequency to the ground infrastructure, is required and sufficient in the simplest cases. This is the configuration of the majority of the apparatuses existing today.

Instead, in order to obtain more considerable diagnostic performance, the necessary flow of telemetry data increases very fast, together with the required calculation power and the number of sensors to be managed.

Furthermore, the combination of multiple acquisitions, complex processing and fast and frequent communications causes an exponential growth of the energy consumption by the monitoring apparatuses. This problem is relatively manageable on locomotives and passenger cars, where there is an on-board electric system from which to draw energy. Instead, it becomes prohibitive on freight cars, where, except for particular cases, there is no on-board infrastructure, except for the pneumatic pipe which controls braking.

The railway train axles and wheels are elements of major importance for safety: the most relevant causes of risk for the safety of property and people depend on them (obviously in addition to the braking system). The failure of an axle or of a wheel is a highly traumatic event and systematically causes derailing, which in turn, with other concurrent cases, may lead to severe accidents.

Conventional low-frequency monitoring cannot detect a crack of the axle unit unless this is clearly manifested, but at that point it evolves rapidly towards failure and there is no guarantee to be able to stop the railway train before the risky event.

So, in order to be really effective, axles condition monitoring needs predictive diagnostic techniques, which consist in analyzing very detailed vibration data (i.e. data acquired at very high frequencies) and sophisticated algorithms, which make it possible to detect deterioration syndromes in consistent advance with respect to the occurrence of the risky event. In order to obtain this, it is necessary to process the on-board data (high calculation power) or to transmit large volumes of data to ground.

In the typical configuration, each railway wagon has two bogies with two axles each. More complex configurations, cars with more than two axles bogies and bogies with more than two axles, are limited to locomotives and to particular freight transport applications.

The most relevant magnitudes for diagnostics, i.e. the operating data of concern of a bogie, are the vibrations of the axle, and the temperature of the bearing in which the axles turns, contained in the socalled axle box. The positioning of the sensors is thus a factor which significantly influences diagnostic system performance. The environmental conditions to which the on-board monitoring apparatuses are subjected and the restricted spaces must be taken into consideration for the positioning of such apparatuses. Furthermore, it is generally problematic to lead an external power supply, even if it is available on the car (such as locomotives, passenger cars). The solutions based on accumulator batteries are absolutely inapplicable: they should either be very large or be replaced very often, with prohibitive maintenance costs (scheduled maintenance, in this case). Energy harvesting techniques remain, but the requirements are very stringent because, as mentioned, the on-board apparatuses must have high calculation and/or communication power and thus they consume a lot of energy. Techniques for harvesting mechanical energy (vibrations) and/or thermal energy (Peltier cells, Seebeck effect devices or the like) are currently used, but can produce microWatt or at most a few milliWatt, which is absolutely insufficient for high calculation power applications. Photovoltaic cells and wind generators are excluded, given their position and the available space. EP 0518456 A1 discloses a method for generating electrical energy by means of a generator and its application in vehicles with an anti-slip system. EP 2006999 A2 discloses an Axial gap type motor/generator. US 4377975 A discloses an axle mounted alternator for railroad cars. EP 2284980 A2 discloses a generator with axial gap and permanent magnets.

It is the object of the present invention to make available a combination of a covering device of an axle box, an axle box and an axle which allows an effective monitoring of the railway bogie axles and which is simple to install, even on bogies which were initially free from diagnostic systems and are free from power supply.

Such object is achieved by means of a combination of a covering device of an axle box, an axle box and an axle as defined in general in claim 1. Preferred and advantageous embodiments of the aforesaid combination are defined in the accompanying dependent claims.

The invention will be better understood from the following detailed description of particular embodiments, with reference to the accompanying drawings which are briefly described in the following paragraph.

### BRIEF DESCRIPTION OF THE DRAWINGS

Figure 1 shows a perspective view from the bottom of a railway vehicle bogie, in which the bogie comprises a monitoring system for acquiring, processing and transmitting bogie operating data, comprising at least one closing device of an axle box comprising at least one electric generator. The monitoring system is a disclosure not belonging to the present invention ("disclosure" in the following).
Figure 2 shows a diagrammatic side section view of a covering device of an axle box of the railway bogie in figure 1, in which the covering device is applied to the axle box and to an end portion of the respective axle with which the box is associated and in which the covering device comprises an electric generator.
Figure 3 shows a perspective partial section view of an axle on which an electric generator of the type of that diagrammatically shown in figure 2 is applied.
Figure 4, directed to a disclosure, shows a general block chart of the monitoring system for acquiring, processing and transmitting diagnostic data of the railway bogie in figure 1.
Figure 5, as another disclosure, shows a general diagrammatic view of a first diagnostic system for a railway train which comprises a plurality of monitoring systems in figure 4.
Figure 6, as another disclosure, shows a general diagrammatic view of a second diagnostic system for a railway train, alternative to the diagnostic system in figure 5.
Figure 7, as another disclosure, shows a block chart of a monitoring system for acquiring, processing and transmitting diagnostic data, which can be used in the train diagnostic system of figure 6 and alternative with respect to the monitoring system in figure 4.

### DETAILED DESCRIPTION

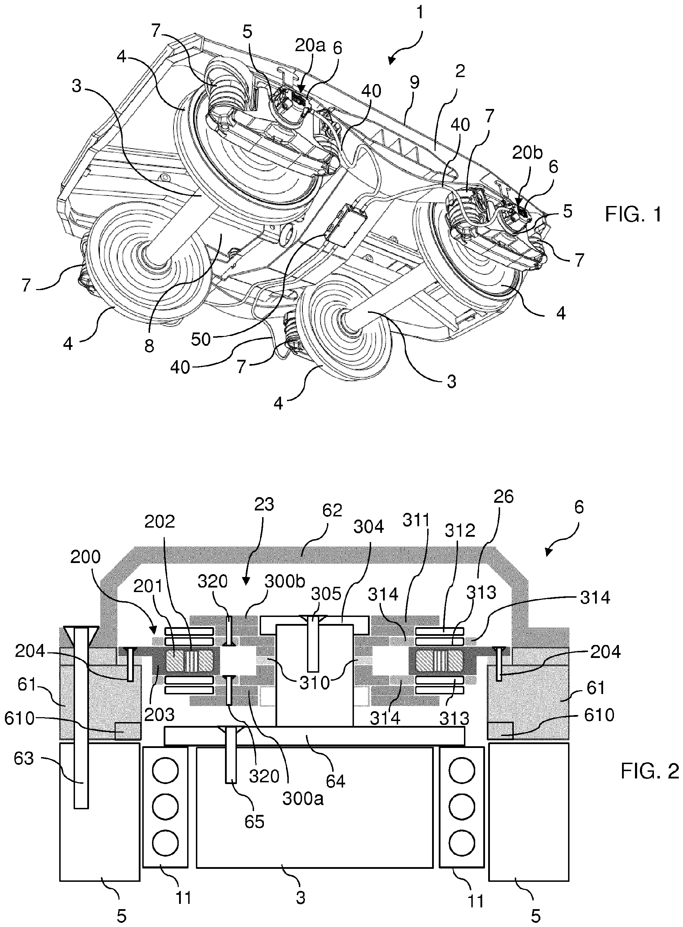

Figure 1 shows an embodiment of a railway bogie 1 by way of example. For example the railway bogie 1 is one of the two bogies of a railway freight wagon. The teachings suggested here are also applicable to other types of railway bogies, therefore the scope of protection is not intended to be limited to the railway freight wagon bogies.

In the particular embodiment shown, the railway bogie 1 comprises two axles 3, each of which is provided with two wheels 4. The railway bogie 1 comprises a bogie frame 2, which supports the two axles 3; a suspension system 7, known in itself to a person skilled in the art and for this reason not described in greater detail, is provided between the frame 2 and the axles 3.

The bogie frame 2 comprises a lower face 8, facing towards the ground in a normal condition of use, and more precisely facing towards a track and/or towards the ballast, and an opposite face 9, facing towards the frame of the railway vehicle, such as for example a wagon or a car, in a normal condition of use of the railway bogie 1.

The railway bogie 1 comprises at least one axle box 5 arranged on an end portion of the railway axle 3 and at least one covering device 6 of the axle box 5 fixed to the axle box 5. The covering device 6 is adapted to define a respective inner compartment 26 between the axle box 5 and the covering device 6. As known, an axle box 5 generally comprises a bearing 11 in which the axle 3 rotates. As further known, a railway bogie 1 comprises two axle boxes 5 arranged on opposite ends of the axle 3 for each axle 3. As the railway bogie 1 comprises two axles 3 in the example in figure 1, it is apparent that in such example the railway bogie 1 will comprise four axle boxes 5 and four respective covering devices 6. At least one of the covering devices 6 comprises an electric generator 23, housed in the inner compartment 26, adapted to produce electrical power by converting part of the rotational kinetic energy of the axle 3.

The electric generator 23 comprises a stator 200 and a rotor 300a, 300b, and the rotor 300a, 300b comprises a first portion 300a and a second portion 300b, preferably identical to each other, between which the stator 200 is axially interposed. This makes it possible to optimize the magnetic flows and consequently the generation of power, in particular at low revolution ratios. Furthermore, if the two portions 300a, 300b are identical, it is possible to optimize production and decrease production costs.

According to a particularly advantageous embodiment, the rotor 300a, 300b is fixed to an end portion of the axle 3 and is adapted to rotate integrally with the axle 3 along the rotation axis of the axle 3.

According to an advantageous embodiment, the stator 200 comprises a stator winding 201 wound on a metal sheet 202, instead of in air, for example. This makes it possible to further optimize gaps and optimize energy generation at low revolution ratios.

According to an advantageous embodiment, the electric generator 23 is designed and dimensioned to provide 1 Watt when the axle 3 rotates at a speed equal to one revolution per second. Given the standard size of railway wheels 4, this corresponds to a speed of the bogie 1 equal to 10km/h. Preferably, the generated power increases with nearly quadratic trend as the rotation speed of the axle increases. This makes it possible to power with continuity also high-power processing units and to transmit large data flows in wireless manner.

Preferably, the stator 200 is outside the box 5 (and thus also outside the bearing 11 in which it is housed) and is fixed to the box, e.g. fixed to the covering device 6, e.g. by means of one or more screws 204.

Preferably, the electric generator 23 is a synchronous polyphase alternator, e.g. three-phase. This implies that the frequency of the induced current is proportional to the rotation speed of the axle 3. This has the advantage of making it possible to perform odometry functions.

According to an advantageous embodiment, the electric generator 23 comprises a feeding shaft 64 of the rotor 300a, 300b fixed to an end portion of the axle 3 with a plurality of screws 65 engaged in nuts 35, e.g. already envisaged in the axle 3. For example, the feeding shaft 64 makes it possible to fix a retaining disc 34 of the bearing 11 within which the axle 3 rotates. The feeding shaft 64 preferably overlaps the retaining disc 34.

Each of the two portions 300a, 300b comprises a rotor flange 311, preferably made of aluminum, and a rotor ring 312, made of ferromagnetic material on which a plurality of permanent magnets 313 is positioned.

According to a preferred embodiment, each of the two portions 300a,300b of the rotor 300 has twenty-four permanent magnets 313. The stator 200 has eighteen coils wound about a metal sheet. These are connected to each other so as to make a three-phase electric machine with six coils per phase.

The rotor 300a, 300b comprises a plastic material template 314, which makes it possible to obtain a desired positioning of the permanent magnets 313 on the rotor ring 312 and successively makes it possible to fix the entire assembly to the rotor flange 311, e.g. for example by means of screws 320. Once positioned, the permanent magnets 313 adhere with a high force to the rotor ring 312 and in all cases the template 314 contributes to holding them in stable position.

Preferably, the permanent magnets 313 are arranged so as to display alternative polarities to the stator 200. The magnetic flux is parallel to the rotation axis of the axle 3.

The stator 200 preferably comprises a stator flange 203 made of plastic material along the circumference of which the coils of the stator winding 201 are arranged with the axis parallel to the rotation axis of the axle 3. Bars 202 made of ferromagnetic material sheet, which have the purpose of reducing the part in air of the magnetic circuit, are preferably positioned in the coils. The stator 200 is preferably fixed along its outer edge to the covering device 6, e.g. by means of screws 63.

According to an embodiment, the covering device 6 comprises a case 61, 62 having a first portion 61 and a second portion 62, which are initially mutually separate and then are axially overlapped and coupled. The first portion 61 is axially interposed between the axle box 5 and the second portion 62 and comprises coupling elements which make it possible to couple the stator 200 with it, e.g. comprises nuts which make it possible to fix the stator 200 by means of the respective screws 204. The first portion 61 is preferably tube-shaped. The second portion 62 is preferably cap- or bell-shaped. In the example in figure 2, the first portion 61 and the second portion 62 are coupled to each other by means of screws 63 which also make it possible to couple such portions 61, 62 to the axle box 5.

An assembly method of a covering device 6 as described above will now be described.

In a first step, the feeding shaft 64 is fixed to the axle 3 with the methods described above. In a second step, the first portion of the rotor 300a is keyed on the feeding shaft 64. In a successive step, the first portion of the case 61 is positioned.

In a successive step, the stator 200 is fixed to the first portion of the case 61; in this case, it is preferably also envisaged to connect the electric wires output from the stator 200 to a connector, not shown in the figures. In a successive step, the second part of the rotor 300b is keyed onto the feeding shaft 64. A ring nut 304, which is screwed by means of a screw 305 to the feeding shaft 64, is fitted over it. The tightening of the ring nut 304, preferably aided by knurling present on the surface of the rotor flange 311, makes the two parts 300a,300b of the rotor integral by friction with the feeding shaft 64, and thus with the axle 3.

Advantageously, appropriate spacers 310 make it possible to adjust the distance of the stator 200 from two portions 300a, 330b of the rotor, and thus the part of the magnetic circuit which closes in air.

Finally, the second portion 62 of the case 61, 62 is positioned and fixed.

The second portion 62 of the casing is preferably positioned and fixed to the axle box 5 using the same nuts present in the box 5, which are normally used to fix a metallic protection cover, which is removed.

In the operation, when the axle 3 rotates, the rotor 300a, 300b rotates together with it and the magnetic axial flux generated by the permanent magnets 313 of the rotor concatenates with the coils of the stator 300, generating by induction electromotive forces which will sustain the produced electric current.

In particularly advantageous embodiments, the covering device 6 of the type described above comprises at least one sensor 21, 22 and/or comprises at least one antenna 23, 24, e.g. comprises a temperature sensor and a vibration sensor and/or a cellular radio antenna and a GPS antenna. If provided, it is convenient to fix the sensors 21a, 21b to the first portion 61 of the case and the antennas 23, 24 to the second portion of the case 62. For example, the sensors 21, 22 may be fixed to a ring 610 arranged as close to the bearing 11 as possible, e.g. placed at the base of the first portion 61 of the case 61, 62. The antennas 23, 24 could be fixed to the inner wall of the second portion 62. Since the case 61,62 is preferably made of metal material, e.g. steel, in the latter case it is appropriate to envisage dielectric windows transparent to the frequency of concern for the operation of the antennas 23,24 in the second portion 62 of the case 61, 62. The reasons for which it is convenient to house at least one sensor and/or at least one antenna in the covering device 6 will be apparent from the description of some disclosures of monitoring systems which will be described below.

According to a disclosure, a monitoring system is applied to the railway bogie 1 for acquiring, processing and transmitting operating data of the railway bogie 1. The monitoring system comprises at least one sensor node 20a, 20b, associated with the axle box 5 and comprising at least one sensor 21,22 positioned in the inner compartment 26 of the covering device 6 adapted and configured to acquire operating data of the axle box 5.

The monitoring system further comprises a concentrator node 50 fixed to the bogie frame 2 outside the covering device 6 of the axle box 5. The concentrator node 50 is operatively connected to the sensor node 20 by means of a wired connection line 40 to receive the diagnostic data acquired by the sensor 21, 22. The concentrator node 50 comprises at least one local processing unit 51 adapted to process the acquired operating data and to obtain processed data, and a radio communication interface 55 to transmit the processed data in the concentrator node 50, e.g. to a land control unit or to a diagnostic system aboard a railway train, e.g. in a locomotive.

In the disclosure shown, the monitoring system comprises four sensor nodes 20a, 20b each associated with a respective axle box 5. Furthermore, as shown for example in figures 1, 4 and 7, there are four wired connection lines 40, i.e. a line 40 is envisaged between each of the sensor nodes 20a, 20b and the concentrator node 50. The wired connection lines 40 are, for example, multipolar conductors, preferably provided with an outer protective sheath, e.g. a metal braid.

With reference to figure 1, in the disclosure shown, the concentrator node 50 is housed in a container fixed to the lower face 8 of the bogie frame. Preferably, such concentrator node is installed on the bogie frame 2 so that the elastic suspension system 7 is operatively associated between the axle 3 (or the axles 3) and the container itself, in order to reduce the vibrations to which the concentrator node 50 is subjected. The aforesaid container is preferably applied to the bogie 1 by means of permanent magnets.

In the disclosure shown, each of the sensor nodes 20a, 20b comprises a temperature sensor 21 and an acceleration sensor 22, e.g. a triaxial MEMS accelerometer. However, the number and type of sensors of each sensor node 20a, 20b may be varied according to the specific design means.

At least one of the sensor nodes described above comprises a covering device 6, of the type described above, comprising the electric generator 23. The electrical power produced by the electric generator 23 is used to supply the processing unit 51 and the radio communication interface 55 of the concentrator node 50. For example, such electrical power is transferred from the sensor node 20a, 20b to the concentrator node 50 by means of the wired connection line 40.

As described above in an embodiment, the electric generator 23 is designed and dimensioned to provide 1 Watt when the axle 3 rotates at a speed equal to one revolution per second. This makes it possible to power with continuity the concentrator node 50, even if this is provided with a processing unit 51 with a high calculation power, and to transmit large data flows outside.

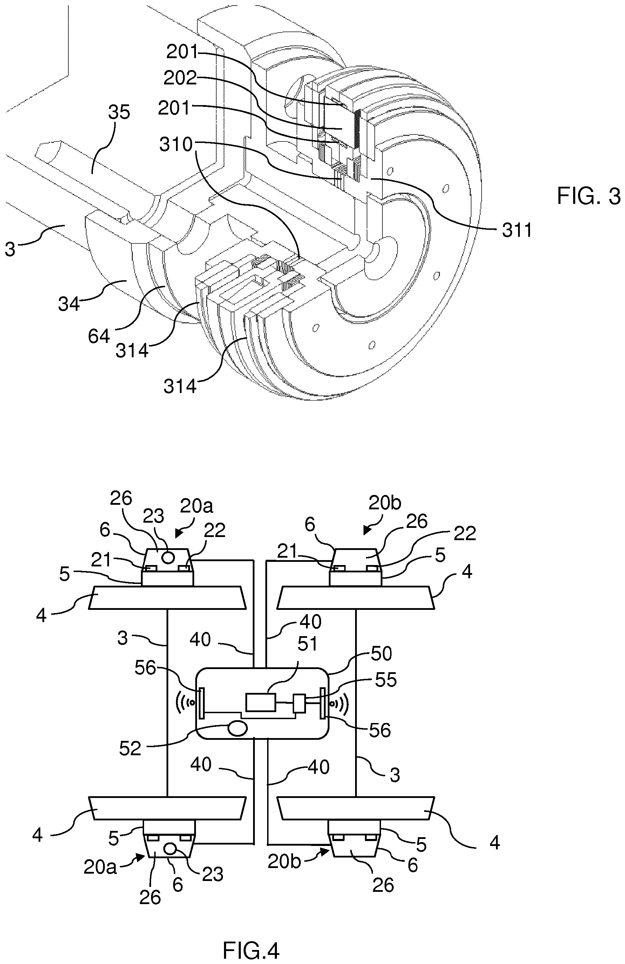

In the disclosure shown in figure 4, two sensor nodes 20a out of four comprise an electric generator 23, to increase the electrical power produced and to guarantee a given redundancy, e.g. in case of failure of one of the two generators. Obviously, it is possible to envisage a different number of electric generators 23, or a single electric generator 23.

Conveniently, the concentrator node 50 comprises a storage device of the energy produced by the electric generator 23. Preferably, the aforesaid storage device comprises a supercapacitor 52. This type of capacitor is a device similar to a normal capacitor but is particularly advantageous because it is made using techniques which make it possible to achieve capacitances of hundreds or thousands of Farads. Such supercapacitor 52 has the function of buffer to overcome temporary energy absorptions by the monitoring system higher than the generated electrical power and, contrary to a rechargeable battery, it does not require periodical maintenance as it has a working life of at least one order of size greater than that of a rechargeable battery.

According to a disclosure, the radio communication interface 55 comprises a pair of directional Wi-Fi antennas 56 mutually oriented in opposite senses along, or parallel to, the travel axis of the railway bogie 1. In such case, the radio communication interface 55 comprises at least one Wi-Fi transceiver 55, operatively connected to the two antennas 56. If the concentrator node 50 is installed on the lower face of the frame 2 of the railway bogie 1 and includes two opposite Wi-Fi antennas 56, the positioning of the Wi-Fi antennas is optimal because the ballast, the tracks and the frame of the railway bogie 1 itself constitute a waveguide for the concerned frequencies. This makes it possible to perform reliable communications and to reduce energy expenditure.

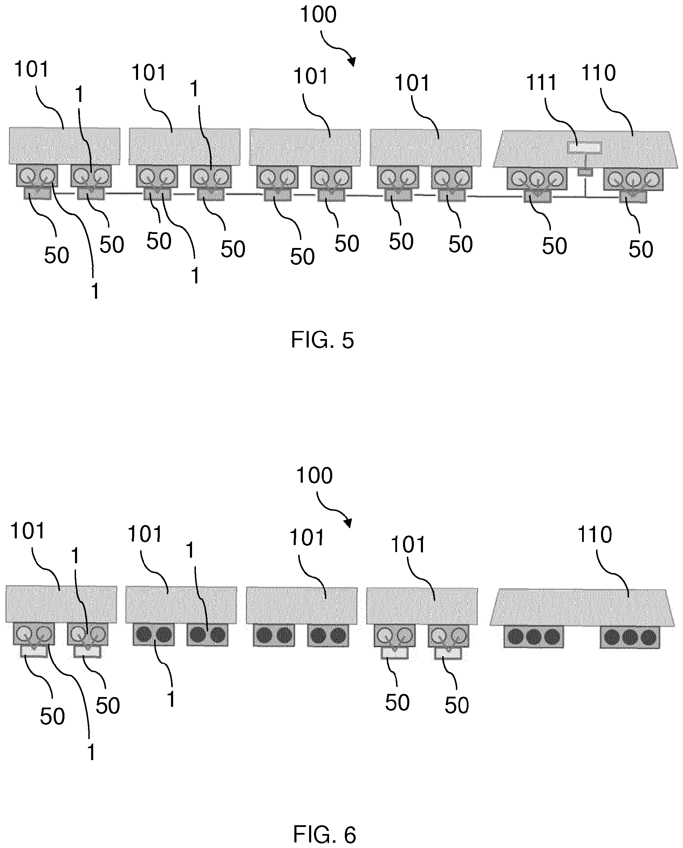

For example, with reference to the diagram in figure 5, by using Wi-Fi communication interfaces, it is possible to put multiple bogies 1 of a railway train 100 into communication with one another to create a railway train network, putting the various concentrator nodes 50, each associated with a respective bogie 1, into communication with one another. In the railway train 100 of figure 5, each bogie 1 of each railway wagon 101 is provided with a concentrator node 50 (with which one or more respective sensor nodes are associated, not shown in figure 3). The plurality of railway bogies 1 of the railway train 100 define a linear array of bogies adjacent to each other in pairs as a whole, and in the linear array the concentrator node 50 of a railway bogie 1 is adapted and configured to communicate by means of a radio communication interface 55 with concentrator nodes 50 of the bogies of the railway train 100, which along the linear array are adjacent to it. The monitoring system described above can also be associated with the axles 3 of the locomotive 110 of the railway train 100, e.g. by associating a concentrator node 50 of the type described above with each of the two bogies of the locomotive 110. Furthermore, an on-board diagnostic unit 111 can be envisaged aboard the locomotive 110, operatively connected to all concentrator nodes 50, which work in practice as signal repeaters for the adjacent concentrator nodes 50. The on-board diagnostic unit 111 is a hardware and software system which makes it possible to inform the driver or maintenance personnel aboard the railway train of possible faults or risk of faults, e.g. by means of a graphic interface. The same information may be sent, either alternatively or additionally, to a ground control unit. The configuration of the diagnostic system in figure 3 will be named "full train equipment" hereinafter.

The concentrator nodes 50 process the data (or the signals) acquired by the sensor nodes 20a, 20b. Processing means any analog and/or digital processing, including filtering, sampling, executing algorithms adapted to identify whether the bogie components satisfy a regularity or fault condition, generating alarms, encoding and compressing data.

The container of the concentrator node 50 is preferably made of metal material, e.g. steel. If provided aboard the concentrator node 50, Wi-Fi antennas may be installed either outside or alternatively inside the container, envisaging dielectric material windows in the container, which allow the transmission and the reception of the radio frequency signals.

Figure 6 shows a general block chart of an alternative disclosure of the diagnostic system in 5, in a configuration which will be also named "vehicle equipment" hereinafter.

In this case, instead of equipping all cars 101, and possibly also the locomotive 110, with the monitoring system described above, in order to satisfy given needs or to respective the set constraints, it is possible to equip only some cars 101 (or only some railway bogies 1), e.g. those which deemed to be the most stressed.

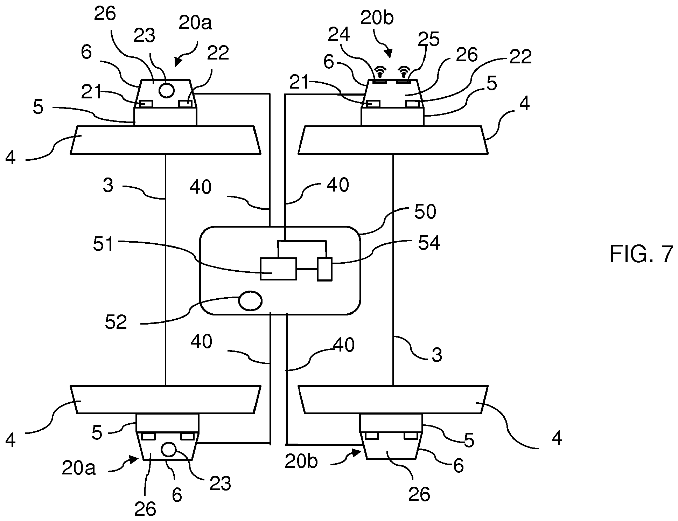

In this case, it is not generally possible to put the concentrator nodes 50 into communication with one another by means of Wi-Fi connections, and for this reason alternative radio interfaces may be envisaged. Indeed, in the disclosure shown in figure 7, as possible alternative to the disclosure in figure 4, the concentrator node 50 may have neither the Wi-Fi transceiver 55 nor the Wi-Fi antennas 56, or at least if such elements are present they are not used. However, the concentrator node 50 may have a radio communication interface 54, which is a GSM and/or GPRS modem, or in general a digital cellular radio communication interface. In this case, it is advantageous and possible to envisage that at least one of the sensor nodes (in the example one of the two sensor nodes 20b) comprises a GSM and/or GPRS antenna 24 or in general an antenna adapted and configured to establish a radio connection with a digital cellular radio network. In this case, the antenna 24 housed in the sensor node 20b is connected to the cellular radio communication interface 54 of the concentrator node 50 by means of the wired connection line 40. In this case, it is further advantageous if at least one of the sensor nodes 20a, 20b of the bogie 1 also comprises a GPS antenna 25. In this case, the concentrator node 50 further comprises a satellite positioning unit (not shown in the figures) operatively connected to said GPS antenna 25, e.g. by means of the wired connection line 40. The presence of the GPS antenna and of the satellite positioning unit advantageously make it possible to be able to detect the position of the bogie 1 or to identify the position of a stretch of track at which the monitoring system detects vibrations which are considered anomalous.

In the disclosure of figure 7, a same sensor node 20b comprises both the cellular radio antenna 24 and the GPS antenna 25 but a different distribution of such antennas can obviously be envisaged.

If, as for the sensor nodes 20b, a sensor node comprises one or more antennas, the covering device 6 may be made of metal material except for more or more dielectric windows transparent to electromagnetic radiations on the concerned bandwidth.

Disclosures of the monitoring systems have been described hereto without illustrating the measures which may be taken to make the monitoring robust to faults and/or errors in detail. Wanting to make the system more robust, the processing unit 50 may have two channels, e.g. two distinct processors, and two radio communication interfaces.

In the configuration of figure 4, applicable to the diagnostic system of figure 5 and for this reason also named full train equipment, the concentrator node 50 can split the processing unit 51 into two distinct processing units (also named channels), two radio communication interfaces 55 and four antennas 56 can be arranged to form two pairs of directional antennas mutually directed in opposite senses, in which two antennas oriented in opposite senses are operatively connected to one of the two radio communication interfaces and the others are operatively connected to the other radio communication interface. Instead, it is not necessary to duplicate the supercapacitor 52 or in general a power storage device.

In the configuration of figure 7, applicable to the diagnostic system configuration in figure 6 and for this reason also named vehicle equipment, the processing unit 51 in the concentrator node 50 can be split into two distinct processing units (or channels), envisaging two cellular radio communication interfaces 54, a cellular radio antenna 24 in at least two sensor nodes 20b and possibly a GPS antenna in at least two sensor nodes 20b. Also in this case, it is not necessary to duplicate the supercapacitor 52 or in general a power storage device.

Preferably in the redundant configurations described above, there are two channels and the redundancy is by availability (1oo2, "1 out of 2" configuration), in redundancy by availability (1oo2 - 1 out of 2 configuration), i.e. there are two channels but one is sufficient to make the apparatus fully operational.

From the above, it is apparent that a combination of the type described above makes it possible to fully achieve the set objects in terms of overcoming the drawbacks of the prior art. By virtue of comprising an electric generator in which the stator comprises a stator winding on metal sheet, air gaps can be minimized and energy generation at low revolution ratios can be optimized. Furthermore, if the rotor comprises two portions between which the stator is interposed the magnetic fluxes are optimized, and the energy production is further optimized in particular at low revolution ratios as a consequence.

The scope of protection of the invention is defined in the appended claims.

## Claims

1. A combination of a covering device (6) of an axle box (5), an axle box and an axle, the covering device thereof being adapted and configured to be coupled to the axle box (5) so as to define an inner compartment (26) between the axle box and the covering device, wherein the covering device (6) comprises an electric generator (23) housed in the inner compartment (26) and adapted to produce electrical power by converting part of the rotational kinetic energy of the axle (3), wherein the electric generator (23) comprises a stator (200) and a rotor (300a, 300b),
**characterized in that**:
- the rotor (300a, 300b) comprises a first portion (300a) and a second portion (300b) between which the stator (200) is axially interposed; and
- each of the two rotor portions (300a, 300b) comprises a rotor flange (311) and a rotor ring (312) of a ferromagnetic material above which a plurality of permanent magnets (313) is positioned;
- the rotor (300a, 300b) comprises a plastic material template (314), that allows to obtain a desired positioning of the permanent magnets (313) on the rotor ring (312) and successively allows to fix the entire assembly to the rotor flange (311).

2. A combination according to claim 1, wherein the rotor (300a, 300b) is attached to an end portion of the axle (3) and is adapted to rotate integrally with the axle (3) along the rotation axis of the axle (3).

3. A combination according to any one of the preceding claims, wherein the covering device comprises a case (61, 62) and wherein the stator (300) is attached to the case (61, 62).

4. A combination according to claim 3, wherein the case (61, 62) comprises a first portion (61) and a second portion (62) axially overlapping each other and coupled to each other, and wherein the first portion (61) is configured to be interposed between the axle box (5) and the second portion (62) and wherein the stator (300) is attached to the first portion (61) of the case (61, 62).

5. A combination according to any one of the preceding claims, wherein the stator (200) has a stator winding (201) wound on a metal sheet (202).

6. A combination according to claim 5, wherein the stator winding (201) comprises a plurality of coils wound on a metal sheet.

7. A combination according to claim 6, wherein the coils have a winding axis parallel to the rotation axis of the axle (3).

8. A combination according to any one of the preceding claims, wherein the electric generator (23) is a synchronous polyphase alternator.

9. A combination according to any one of the preceding claims, wherein said fixing is made using screws.

10. A combination according to any one of the preceding claims, the permanent magnets (313) are arranged so as to display alternative polarities to the stator (200).

11. A bogie (1), comprising:
- a bogie frame (2) which supports at least one railway axle (3),
- at least one axle box (5) arranged at one end portion of the railway axle (3);
- at least one covering device (6) of the axle box attached to the axle box (5), wherein the covering device (6) of the axle box, the axle box and the axle define a combination according to any one of the preceding claims.

## Patentansprüche

1. Kombination aus einer Abdeckung (6) eines Achslagers (5), einem Achslager und einer Achse, wobei die Abdeckung davon ausgelegt und konfiguriert ist, um mit dem Achslager (5) verbunden zu werden, um einen Innenraum (26) zwischen dem Achslager und der Abdeckung zu definieren, wobei die Abdeckung (6) einen elektrischen Generator (23) umfasst, der in dem Innenraum (26) untergebracht und ausgelegt ist, um elektrische Energie durch Umwandeln eines Teils der kinetischen Rotationsenergie der Achse (3) zu erzeugen, wobei der elektrische Generator (23) einen Stator (200) und einen Rotor (300a, 300b) umfasst,
**dadurch gekennzeichnet, dass**:
- der Rotor (300a, 300b) einen ersten Abschnitt (300a) und einen zweiten Abschnitt (300b) umfasst, zwischen denen der Stator (200) axial eingefügt ist; und
- jeder der zwei Rotorabschnitte (300a, 300b) einen Rotorflansch (311) und einen Rotorring (312) aus einem ferromagnetischen Material umfasst, über dem eine Vielzahl von Permanentmagneten (313) positioniert ist;
- der Rotor (300a, 300b) eine Schablone (314) aus Kunststoffmaterial umfasst, die ermöglicht, eine gewünschte Positionierung der Permanentmagneten (313) auf dem Rotorring (312) zu erhalten, und ermöglicht, die gesamte Anordnung schrittweise an dem Rotorflansch (311) zu befestigen.

2. Kombination nach Anspruch 1, wobei der Rotor (300a, 300b) an einem Endabschnitt der Achse (3) angebracht und ausgelegt ist, um sich einstückig mit der Achse (3) entlang der Rotationsachse der Achse (3) zu drehen.

3. Kombination nach einem der vorhergehenden Ansprüche, wobei die Abdeckung ein Gehäuse (61, 62) umfasst und wobei der Stator (300) an dem Gehäuse (61, 62) angebracht ist.

4. Kombination nach Anspruch 3, wobei das Gehäuse (61, 62) einen ersten Abschnitt (61) und einen zweiten Abschnitt (62) umfasst, die einander axial überlappen und miteinander verbunden sind, und wobei der erste Abschnitt (61) konfiguriert ist, um zwischen dem Achslager (5) und dem zweiten Abschnitt (62) eingefügt zu sein, und wobei der Stator (300) an dem ersten Abschnitt (61) des Gehäuses (61, 62) angebracht ist.

5. Kombination nach einem der vorhergehenden Ansprüche, wobei der Stator (200) eine auf ein Metallblech (202) gewickelte Statorwicklung (201) aufweist.

6. Kombination nach Anspruch 5, wobei die Statorwicklung (201) eine Vielzahl von Spulen umfasst, die auf ein Metallblech gewickelt sind.

7. Kombination nach Anspruch 6, wobei die Spulen eine Wicklungsachse parallel zur Rotationsachse der Achse (3) aufweisen.

8. Kombination nach einem der vorhergehenden Ansprüche, wobei der elektrische Generator (23) ein synchroner mehrphasiger Wechselstromgenerator ist.

9. Kombination nach einem der vorangehenden Ansprüche, wobei die Befestigung unter Verwendung von Schrauben erfolgt.

10. Kombination nach einem der vorhergehenden Ansprüche, wobei die Permanentmagneten (313) so angeordnet sind, dass sie dem Stator (200) gegenüber alternative Polaritäten zeigen.

11. Drehgestell (1), umfassend:
- einen Drehgestellrahmen (2), der mindestens eine Eisenbahnachse (3) trägt,
- mindestens ein Achslager (5), das an einem Endabschnitt der Eisenbahnachse (3) angeordnet ist;
- mindestens eine am Achslager (5) angebrachte Abdeckung (6) des Achslagers, wobei die Abdeckung (6) des Achslagers, das Achslager und die Achse eine Kombination nach einem der vorhergehenden Ansprüche bilden.

## Revendications

1. Combinaison d'un couvercle (6) d'une boîte d'essieu (5), d'une boîte d'essieu et d'un essieu, son couvercle étant adapté et conçu pour être accouplé à la boîte d'essieu (5) de manière à définir un compartiment interne (26) entre la boîte d'essieu et le couvercle, dans laquelle le couvercle (6) comprend un générateur électrique (23) logé dans le compartiment interne (26) et adapté pour produire de la puissance électrique par conversion d'une partie de l'énergie cinétique de rotation de l'essieu (3), dans laquelle le générateur électrique (23) comprend un stator (200) et un rotor (300a, 300b),
**caractérisée en ce que** :
- le rotor (300a, 300b) comprend une première partie (300a) et une seconde partie (300b) entre lesquelles le stator (200) est interposé axialement ; et
- chacune des deux parties de rotor (300a, 300b) comprend une bride de rotor (311) et une bague de rotor (312) d'un matériau ferromagnétique au-dessus duquel une pluralité d'aimants permanents (313) est positionnée ;
- le rotor (300a, 300b) comprend un gabarit en matière plastique (314) qui permet d'obtenir un positionnement souhaité des aimants permanents (313) sur la bague de rotor (312) et permet successivement de fixer l'ensemble entier sur la bride de rotor (311).

2. Combinaison selon la revendication 1, dans laquelle le rotor (300a, 300b) est attaché à une partie d'extrémité de l'essieu (3) et est adapté pour tourner solidairement avec l'essieu (3) suivant l'axe de rotation de l'essieu (3).

3. Combinaison selon l'une quelconque des revendications précédentes, dans laquelle le couvercle comprend un carter (61, 62) et dans laquelle le stator (300) est fixé au carter (61, 62).

4. Combinaison selon la revendication 3, dans laquelle le carter (61, 62) comprend une première partie (61) et une seconde partie (62) se chevauchant axialement l'une et l'autre et étant accouplées l'une à l'autre et dans laquelle la première partie (61) est conçue pour être interposée entre la boîte d'essieu (5) et la seconde partie (62) et dans laquelle le stator (300) est attaché à la première partie (61) du carter (61, 62).

5. Combinaison selon l'une quelconque des revendications précédentes, dans laquelle le stator (200) comporte un enroulement de stator (201) enroulé sur une feuille métallique (202).

6. Combinaison selon la revendication 5, dans laquelle l'enroulement de stator (201) comprend une pluralité de bobines enroulées sur une feuille métallique.

7. Combinaison selon la revendication 6, dans laquelle les bobines ont un axe d'enroulement parallèle à l'axe de rotation de l'essieu (3).

8. Combinaison selon l'une quelconque des revendications précédentes, dans laquelle le générateur électrique (23) est un alternateur polyphasé synchrone.

9. Combinaison selon l'une quelconque des revendications précédentes, dans laquelle ladite fixation est réalisée à l'aide de vis.

10. Combinaison selon l'une quelconque des revendications précédentes, les aimants permanents (313) sont disposés de manière à présenter des polarités alternatives au stator (200).

11. Bogie (1) comprenant :
- un châssis de bogie (2) qui supporte au moins un essieu ferroviaire (3),
- au moins une boîte d'essieu (5) disposée sur une partie d'extrémité de l'essieu ferroviaire (3) ;
- au moins un couvercle (6) de la boîte d'essieu attaché à la boîte d'essieu (5), dans lequel le couvercle (6) de la boîte d'essieu, la boîte d'essieu et l'essieu définissent une combinaison selon l'une quelconque des revendications précédentes.
